# EUROPEAN PATENT SPECIFICATION

(11) **EP 4 201 209 B1**
(45) Date of publication and mention of the grant of the patent: **13.08.2025**
(21) Application number: 21217392.6
(22) Date of filing: 23.12.2021
(51) Int. Cl.: G01G 13/24, A21C 9/08, A21C 11/10, B65B 19/34, G01F 13/00, B65B 37/04

(54) **A DOSING APPARATUS FOR DOSING LONG-TYPE PASTA AND METHOD THEREOF**
DOSIERVORRICHTUNG ZUM DOSIEREN VON LANGEN NUDELN UND VERFAHREN DAFÜR
APPAREIL DE DOSAGE DE PÂTES DE TYPE LONG ET PROCÉDÉ ASSOCIÉ

(43) Date of publication of application: 28.06.2023
(73) Proprietor: Pavan S.p.A., 35015 Galliera Veneta (PD) (IT)
(72) Inventor: MARINI, Roberto, 51031 Agliana (PT) (IT)
(74) Representative: Dondi, Silvia

(56) References cited:
- EP-A1- 0 680 879
- EP-A1- 1 129 947
- EP-A1- 3 326 922
- CN-U- 213 384 820
- JP-A- H0 972 775
- US-A- 3 135 343

## Description

The present invention relates to a dosing apparatus for dosing long-type pasta and a method thereof.

In particular, the proposed apparatus find application in dosing long-type pasta, such as spaghetti, linguine, bucatini, fettuccine, tagliatelle, etc.

Dosing machines for long-type pasta are already known for weighing pasta before packaging it.

These machines are used to partition an overall amount of pasta in predefined weight portions (or doses) to be received by a feeding conveyor that guides them towards a packaging machine.

Document EP0680879 A1 discloses a method for weighing out long pasta comprising a first rough weighing stage in which a pasta quantity is weighed having a weight slightly less than the weight of the pasta to be packaged, and a second weighing stage, the fine weighing stage. In the latter on the basis of information received during the first rough weighing stage, that pasta quantity is weighed out which when added to the pasta quantity weighed during the rough weighing stage results in the predetermined weight of pasta to be packaged.

Document EP3326922 A1 discloses an apparatus for transferring long pasta from a production line towards a packaging machine, comprising a loader assembly for long pasta, which includes at least one descender of long pasta, dosing means and a rotor provided with a cavity. The apparatus comprises also a bucket conveyor positioned below the rotor.

JPH0972775A also discloses a long pasta dosing apparatus, comprising fine and rough dosing channels, provided with independent vibrations means to facilitate the descent of pasta.

A known dosing machine for dosing long-type pasta is disclosed, for example, in document WO 2015/044796 A1. It comprises a combination of two dosing devices:
- a rough dosing device, provided with a channel having a transversal blade, for discharging in a first basket a rough weight amount of pasta corresponding to 80%-90% of the target weight;
- a fine dosing device, provided with a channel having a transversal blade, for discharging a further fine amount of pasta in a second basket, arranged downstream of the first one. The rough weight amount is added to the fine weight amount of pasta is in order to obtain the target weight of pasta to be packaged.

Upon measuring the rough weight amount by an electronic load cell, the fine weight amount is calculated as the difference between the target weight and the measured rough weight.

The fine dosing device is then triggered to adjust the height of its blade and to release a further fine amount of pasta that should correspond to the calculated fine weight amount.

Indeed, the further fine amount of pasta is established by the volume of the fine dosing channel and the height of its blade. Thus, there occurs a conversion from the calculated weight to a volume of pasta to be discharged by the fine dosing channel, which is used to adjust the height of the blade of the fine dosing device.

In known machines, to facilitate the movement of the product towards the blades, both the rough and fine dosing device are moved by a vibration system. The intensity of the vibrations is usually adjustable according to the shape and the roughness of the product. On mainly round formats such as spaghetti and bucatini, as those products flow easily, low intensity vibrations are used. Instead, for products such as bronze extruded spaghetti or flat shapes such as tagliatelle, which flow roughly, high intensity vibrations are used.

However, it has been observed that when the vibrations exceed a certain level of intensity, there is a positive effect in the product movement within the fine dosing device and a negative effect in the product movement within the rough dosing device. In particular, the product in the rough dosing device becomes very compact. The more compact the product, the higher the risk of breakage when is processed by the doser.

In such known machines, the rough and fine dosing is performed by a blade which is movable through the corresponding channel so as to separate a precalculated quantity of pasta from the upper flow. When the blade enters into the product to separate the portion to be weighed, the pasta dough in contact with the blade are deformed. If the deformation exceeds a certain value, all the pasta dough adjacent to the blade breaks.

This is acceptable in dosing processes with slightly compacted product, but it is significant and unacceptable when the product is well compacted.

The need is felt to reduce the number of breakages inside the dosing machine.

In this context, the technical task at the basis of the present invention is to propose a dosing apparatus for dosing long-type pasta and a method thereof, which overcome the above-mentioned drawbacks of the prior art.

In particular, the object of the present invention is to propose a dosing apparatus for dosing long-type pasta, which improves the speed and reliability of the operations, especially for products with low flowability.

Another object of the present invention is to propose a dosing apparatus for dosing long-type pasta, which prevents the long-type pasta in the rough dosing device from compacting excessively, but at the same time does not slow the pasta flow in the fine dosing device.

Another object of the present invention is to propose a dosing apparatus for dosing long-type pasta, which reduces the number of breakages in pasta with respect to the known prior art.

The stated technical task and specified objects are substantially achieved by a dosing apparatus for dosing long-type pasta defined by independent claim 1.

The stated technical task and specified objects are substantially achieved by a method for dosing long-type pasta defined by independent claim 10.

Further characteristics and advantages of the present invention will more fully emerge from the non-limiting description of a preferred but not exclusive embodiment of a dosing apparatus for dosing long-type pasta and a method thereof, as depicted in the attached figures:

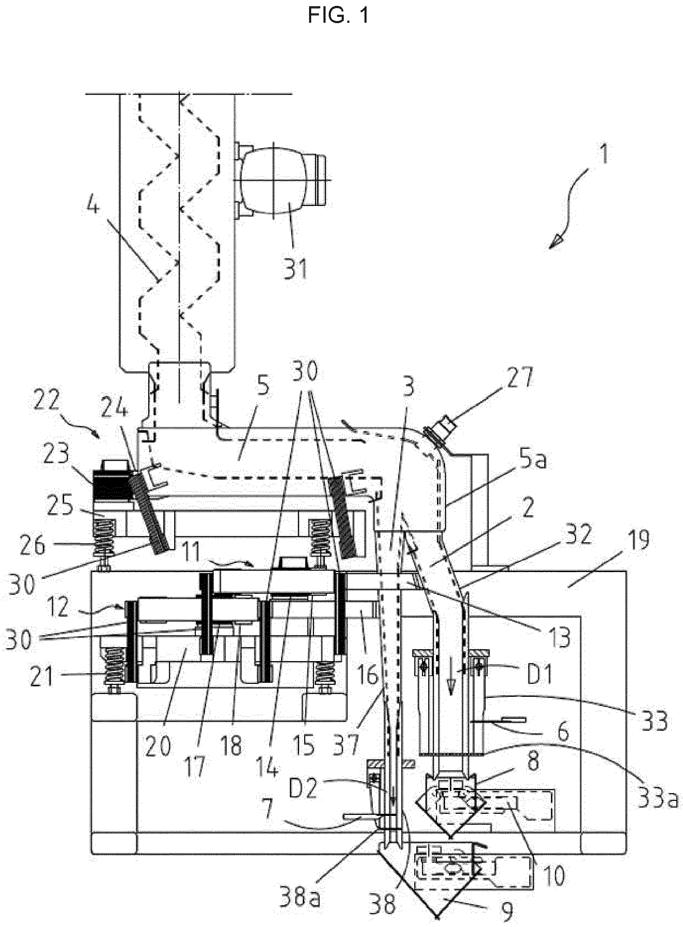

- figure 1 illustrates a schematic sectional view of a dosing apparatus for dosing long-type pasta, according to the present invention;

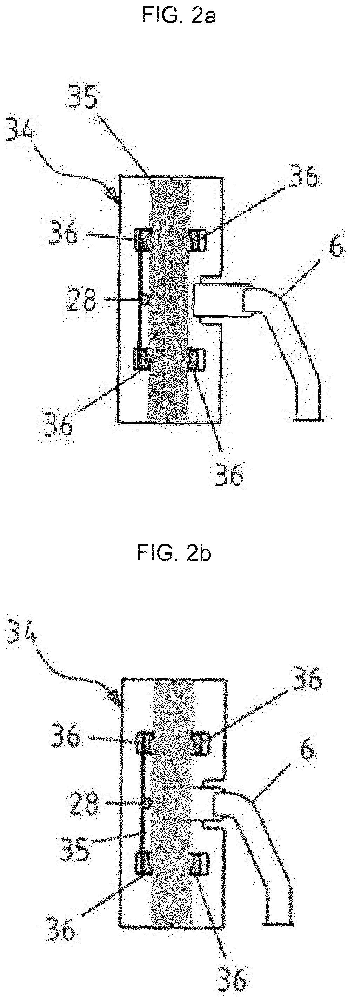

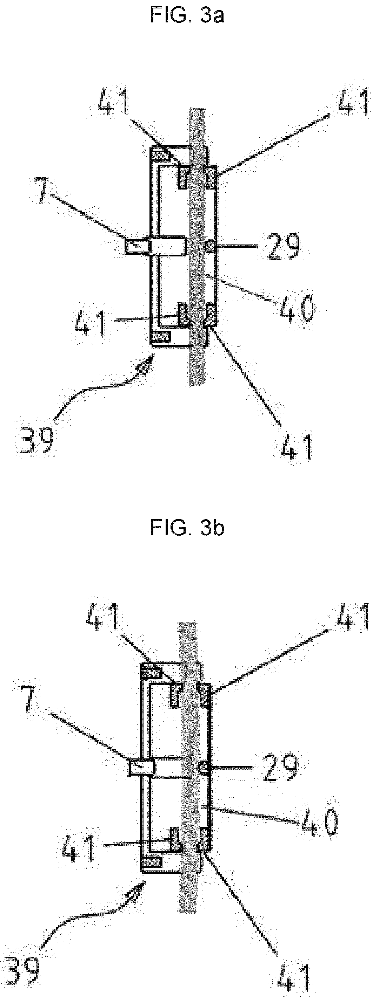

- figures 2a, 3a illustrate a condition where the partition element is not inserted in the pasta dough, for the rough and fine dosing channels respectively;
- figures 2b, 3b illustrate a condition where the partition element is inserted in the pasta dough, for the rough and fine dosing channels respectively;

With reference to the figures, number 1 indicates a dosing apparatus for dosing long-type pasta, such as spaghetti, linguine, bucatini, fettuccine, tagliatelle, etc.

The dosing apparatus 1 comprises a rough dosing channel 2 for dosing a rough weight amount of pasta corresponding to 80%-90% of a target weight of pasta to be dosed.

The dosing apparatus 1 comprises a fine dosing channel 3 for dosing a fine weight amount of pasta to be added to the rough weight amount in order to obtain the target weight.

The two dosing channels 2, 3 are adapted to receive long-type pasta coming from a production line (not illustrated) and to transfer it to a packaging line (not illustrated).

The rough dosing channel 2 and the fine dosing channel 3 are arranged so that long-type pasta is dosed through them by gravity.

According to the illustrated embodiment, an end portion of the rough dosing channel 2 and an end portion of the fine dosing channel 3 are parallel to each other.

Preferably, the rough dosing channel 2 and the fine dosing channel 3 are arranged close to each other.

Preferably, they bifurcate from a common origin.

In particular, the fine dosing channel 3 is longer than the rough dosing channel 2.

Preferably, the rough dosing channel 2 has a larger cross-section than the fine dosing channel 3.

According to the illustrated embodiment, the dosing apparatus 1 comprises also a vertical feeding channel 4.

The long-type pasta consists of elongated elements, each developing along a main direction.

The pasta elongated elements are arranged in parallel and they are fed to the dosing channels 2, 3 by the vertical feeding channel 4, that is usually called "descender" or "feeding chimney" in this specific field.

In an embodiment of the invention, illustrated herewith, the vertical feeding channel 4 is shaped according to a serpentine path.

In any case, the vertical feeding channel 4 is arranged (that means oriented) so that long-type pasta is transferred towards the dosing channels 2, 3 by gravity.

The vertical feeding channel 4 is in communication with the dosing channels 2, 3 directly or indirectly. According to the illustrated embodiment, the dosing apparatus 1 also comprises a horizontal feeding channel 5 that receives long-type pasta from the vertical feeding channel 4 and transfers it to the dosing channels 2, 3 downwards.

The dosing channels 2, 3 bifurcate from an end 5a of the horizontal feeding channel 5.

The pasta elongated elements arrive in the dosing channels 2, 3 with their main direction that is substantially orthogonal to the descent path of the pasta dough within the dosing channels 2, 3.

The dosing apparatus 1 comprises a first partition element 6 that is arranged transversely to the rough dosing channel 2 and is movable therethrough.

Analogously, the dosing apparatus 1 comprises a second partition element 7 that is arranged transversely to the fine dosing channel 3 and is movable therethrough.

According to an embodiment, both the partition elements 6, 7 are paddles.

According to another embodiment, both the partition elements 6, 7 are blades.

In particular, the first partition element 6 is movable between:
- a working position in which the first partition element 6 is transversally inserted within the rough dosing channel 2, and
- an idle position in which the first partition element 6 is extracted from the rough dosing channel 2.

Analogously, the second partition element 7 is movable between:
- a working position in which the second partition element 7 is transversally inserted within the fine dosing channel 3, and
- an idle position in which the second partition element 7 is extracted from the fine dosing channel 3.

The movement of each partition element 6, 7 between the working and the idle position may be obtained by any suitable actuating means, like a pneumatic cylinder or the like.

The first partition element 6 is therefore inserted through the rough dosing channel 2 so as to provisionally separate below a first quantity of pasta. Said first quantity represents the rough weight amount.

Analogously, the second partition element 7 is inserted through the fine dosing channel 3 so as to provisionally separate below a second quantity of pasta. Said second quantity represents the fine weight amount.

Preferably, long-type pasta coming from the rough dosing channel 2 is collected in a first basket 8 and long-type pasta coming from the fine dosing channel 3 is collected in a second basket 9.

According to an embodiment of the invention, these two baskets 8, 9 are arranged in series. In particular, the second basket 9 is arranged downstream the first basket 8.

Preferably, the first basket 8 has an outlet that flows into an inlet of the second basket 9.

The outlet of the first basket 8 is preferably equipped with a closing element so that the first basket 8 may be separated from the second basket 9.

The dosing apparatus 1 further comprises at least one weighing means 10 for measuring the weight of long-type pasta downstream the rough dosing channel 2. The weighing means 10 preferably comprises a loading cell operatively active on the first basket 8 to measure the weight of the pasta discharged from the rough dosing channel 2.

Based on the weight measured by the loading cell active on the first basket 8, the second partition element 7 is positioned at a calculated height of the fine dosing channel 3 so as to separate a quantity of pasta having weight equal to the difference between the target weight and the rough weight measured by the loading cell.

This dosing operation is of the volumetric type. Since other geometrical dimensions are already known and does not mutate, the volume (and consequently the weight) is directly dependent from the height.

The dosing apparatus 1 comprise first vibration means 11 that are operatively active on the rough dosing channel 2 for imparting a vibration thereto. The vibration facilitates the descent of long-type pasta within the rough dosing channel 2.

The dosing apparatus 1 comprise second vibration means 12 that are operatively active on the fine dosing channel 3 for imparting a vibration thereto. The vibration facilitates the descent of long-type pasta within the fine dosing channel 3.

The second vibration means 12 are independent from the first vibration means 11.

In particular, the first vibration means 11 are configured to impose a first intensity of vibration on the rough dosing channel 2, whereas the second vibration means 12 are configured to impose a second intensity of vibration on the fine dosing channel 3.

According to the product to be dosed, the first and the second intensity may be the same or the first intensity may be greater than the second one or vice versa.

For example, the vibration imposed on the fine dosing channel 3 is higher than the one on the rough dosing channel 2, i.e. the second intensity of vibration is greater than the first one.

In the known solutions, this is not possible because one vibration system imposes the same intensity of vibration to both the channels 2, 3. The operator must decide whether to keep the vibration level low to avoid excessive product compaction in the rough dosing channel, worsening product flow in the fine dosing channel, or to keep the vibration level high to have perfect product flow in the fine dosing channel, worsening the compaction degree of the product in the rough dosing channel.

The present invention, on the other hand, enables the operator to manage vibrations on the two channels 2, 3 independently, preventing excessive product compaction in the rough dosing device 2, but at the same time keeping the product flow in the fine dosing channel 3 at a desired level. The managing on the two channels independently therefore increases the efficiency of the dosing apparatus 1 in terms of product flow and reduction of product breakage.

In an embodiment of the invention, illustrated herewith, the first vibration means 11 comprise a first support frame 13 to which the rough dosing channel 2 is rigidly connected. The first support frame 13 is provided with a first ferromagnetic core 15. Thus, the first ferromagnetic core 15 is connected to the rough dosing channel 2 to impose the first intensity of vibration.

The first vibration means 11 comprise a first ferromagnetic coil 14 facing the first ferromagnetic core 15.

In an embodiment of the invention, illustrated herewith, the second vibration means 12 comprise a second support frame 16 to which the fine dosing channel 3 is rigidly connected. The second support frame 16 is provided with a second ferromagnetic core 18. Thus, the second ferromagnetic core 18 is connected to the fine dosing channel 3 to impose the second intensity of vibration.

The second vibration means 12 comprise a second ferromagnetic coil 17 facing the second ferromagnetic core 18.

The first and second vibration means 11, 12 are elastically connected to a fixed frame 19 of the dosing apparatus 1.

In particular, the dosing apparatus 1 comprises a mass 20. The first and second vibration means 11, 12 are connected to the mass 20. The mass 20 is in turn connected by one or more elastic springs 21 to the fixed frame 19.

According to one embodiment, the first and second ferromagnetic coils 15, 18 are both connected to the same mass 20.

In another embodiment, not illustrated, the dosing apparatus 1 comprises a mass 20 for each one of the first and second vibration means 11, 12.

Preferably, the first support frame 13 is mounted on the mass 20 by one or more leaf springs 30. In the embodiment herewith illustrated, there are four leaf springs 30 active on the first support frame 13.

Preferably, the second support frame 16 is mounted on the mass 20 by one or more leaf springs 30. In the embodiment herewith illustrated, there are four leaf springs 30 active on the second support frame 16.

According to one embodiment, the vertical feeding channel 4 is provided with a moto-vibrator 31 to facilitate the descent of long-type pasta within the vertical feeding channel 4.

According to one embodiment, third vibration means 22 are operatively active on the horizontal feeding channel 5 for imparting a vibration thereto. In an embodiment of the invention, illustrated herewith, the third vibration means 22 comprise a third ferromagnetic core 24 connected to the horizontal feeding channel 5 and a third ferromagnetic coil 23 facing the third ferromagnetic core 24.

Preferably, the third vibration means 22 are elastically connected to the fixed frame 19 of the dosing apparatus 1.

Preferably, the third ferromagnetic coil 23 is mounted on an additional mass 25. The additional mass 25 is in turn connected to the fixed frame 19 by one or more elastic springs 26.

Preferably, the horizontal feeding channel 5 is mounted on the additional mass 25 by means of one or more leaf springs 30. In the embodiment herewith illustrated, there are four leaf springs 30 active on the horizontal feeding channel 5.

Preferably, the dosing apparatus 1 comprise a sensor 27 active on the end 5a of the horizontal feeding channel 5 for determining the level of pasta. If the level is lower than a predefined minimum value, the third vibration means 22 are configured to put the horizontal feeding channel 5 in vibration for feeding pasta until a correct value is obtained.

The dosing apparatus 1 further comprises a first deformation limiting device 28 arranged at the rough dosing channel 2. The first deformation limiting device 28 is arranged opposite to the first partition element 6 with respect to the rough dosing channel 2. The first deformation limiting device 28 represents a mechanical stop that limits the deformation induced by the insertion of the first partition element 6 into the pasta dough.

According to a preferred embodiment, the dosing apparatus 1 further comprises a second deformation limiting device 29 arranged at the fine dosing channel 3. In particular, the second deformation limiting device 29 is arranged opposite to the second partition element 7 with respect to the fine dosing channel 3. The second deformation limiting device 29 represents a mechanical stop that limits the deformation induced by the insertion of the second partition element 7 into the pasta dough.

The first deformation limiting device 28 is a shaped profile.

The shaped profile is elongated along a prevalent direction that is substantially parallel to the first descent direction D1.

Preferably, the second deformation limiting device 29 is a shaped profile.

Preferably, the shaped profile is elongated along a prevalent direction that is substantially parallel to the second descent direction D2.

The rough dosing channel 2 comprises a first feeding portion 32 and a rough dosing portion 33. The first feeding portion 32 is arranged upstream of the rough dosing portion 33. The first feeding portion 32 is put in vibration by the first vibration means 11 to facilitate the descent of the pasta dough towards the rough dosing portion 33.

The rough dosing portion 33 performs the task of preparing the portion of the product that is then deposited in the first basket 8. The first partition element 6 is arranged at the rough dosing portion 33 and is movable therethrough.

In particular, the pasta dough moves within the rough dosing portion 33 along a first descent direction D1. The first partition element 6 is movable orthogonally with respect to the first descent direction D1 of the long-type pasta.

The rough dosing portion 33 comprises first guiding means 34 arranged so as to define a first internal space 35 within which the pasta dough is confined and guided in its descent. The first guiding means 34 develop according to one or more directions parallel to said first descent direction D1.

Preferably, the rough dosing portion 33 is defined and delimited laterally by the first guiding means 34.

Preferably, the rough dosing portion 33 is provided at its lower end with at least one bottom wall 33a selectively occluding the communication with the first basket 8. The bottom wall 33a opens when the first partition element 6 is inserted into the pasta dough so as to discharge only the rough weight amount into the first basket 8. The remaining part of the pasta dough in the rough dosing channel 2 is supported and stopped by the first partition element 6 as long as the bottom wall 33a is opened.

When closed, the bottom wall 33a supports the pasta dough above and stops its descent.

The first guiding means 34 comprise two pairs of guides 36. The guides 36 of a pair are arranged at opposite corresponding sides of the pasta dough.

The two pairs of guides 36 are distanced from one another so as that the first partition element 6 enters the first internal space 35 (i.e. the pasta dough, when the apparatus is operating) between the two pairs of guides 36. The first deformation limiting device 28 is arranged between the two pairs of guides 36 but at an opposite side to the first partition element 6. When the first deformation limiting device 28 is a shaped profile, the shaped profile 28 and the guides 36 develops along parallel directions.

The shaped profile 28 and the guides 36 are parallel to the first descent direction D1.

In an embodiment of the invention, illustrated herewith, the fine dosing channel 3 comprises a second feeding portion 37 and a fine dosing portion 38. The second feeding portion 37 is arranged upstream of the fine dosing portion 38. The second feeding portion 37 is put in vibration by the second vibration means 12 to facilitate the descent of the pasta dough towards the fine dosing portion 38.

The fine dosing portion 38 performs the task of preparing the finishing portion of the product that is then deposited in the second basket 9. The second partition element 7 is arranged at the fine dosing portion 38 and is movable therethrough.

In particular, the pasta dough moves within the fine dosing portion 38 along a second descent direction D2. The second partition element 7 is movable orthogonally with respect to the first descent direction D2 of the long-type pasta.

Preferably, the fine dosing portion 38 comprises second guiding means 39 arranged so as to define a second internal space 40 within which the pasta dough is confined and guided in its descent. Preferably, the second guiding means 39 develop according to one or more directions parallel to said second descent direction D2.

Preferably, the fine dosing portion 38 is defined and delimited laterally by the second guiding means 39.

Preferably, the fine dosing portion 38 is provided at its lower end with at least one bottom wall 38a selectively occluding the communication with the second basket 9. The bottom wall 38a opens when the second partition element 7 is inserted into the pasta dough so as to discharge only the fine weight amount into the second basket 9. The remaining part of the pasta dough in the fine dosing channel 3 is supported and stopped by the second partition element 7 as long as the bottom wall 38a is opened.

When closed, the bottom wall 38a supports the pasta dough above and stops its descent.

In an embodiment of the invention, illustrated herewith, the second guiding means 39 comprise two pairs of guides 41. The guides 41 of a pair are arranged at opposite corresponding sides of the pasta dough.

The two pairs of guides 41 are distanced from one another so as that the second partition element 7 enters the second internal space 40 (i.e. the pasta dough, when the apparatus is operating) between the two pairs of guides 41. The second deformation limiting device 29 is arranged between the two pairs of guides 41 but at an opposite side with respect to the second partition element 7.

When the second deformation limiting device 29 is a shaped profile, the shaped profile 29 and the guides 41 develops along parallel directions.

In particular, the shaped profile 29 and the guides 41 are parallel to the second descent direction D2.

A method for dosing long-type pasta, according to the present invention, is described hereafter. The method is advantageously implemented by a dosing apparatus 1 according to the above.

The method comprises a step of imposing a first intensity of vibration on the rough dosing channel 2.

The method comprises a step of imposing a second intensity of vibration on the first dosing channel 3.

Preferably, the step of imposing a first intensity of vibration on the rough dosing channel 2 and the step of imposing a second intensity of vibration on the first dosing channel 3 takes place at least partly at the same time.

That is to say that, during an operating condition of the dosing apparatus 1, the rough dosing channel 2 is subjected to the first intensity of vibration while the fine dosing channel 3 is subjected to the second intensity of vibration.

According to the product to be dosed, the first and the second intensity may be the same or the first intensity may be greater than the second one or vice versa.

For example, the vibration imposed on the fine dosing channel 3 is higher than the one on the rough dosing channel 2, i.e. the second intensity of vibration is greater than the first one.

The characteristics and the advantages of the dosing apparatus for dosing long-type pasta and of the method thereof, according to the present invention, are clear, as are the advantages.

In particular, the proposed independent first and second vibration means make it possible to impose different intensities of vibration on each of the two dosing channels. This allows efficient management of different parameters during dosing operations.

The operator is able to manage vibrations on the two channels independently. For example, higher intensity vibration is imposed to the fine dosing channel and a lower one to the rough dosing channel. This prevents excessive product compaction in the rough dosing device, but at the same time keeps the product flow in an optimal condition in the fine dosing channel. This increases the efficiency of the dosing apparatus 1 in terms of product flow and reduction of product breakage.

Moreover, the presence of a deformation limit device opposite to the partition element limits the deformation of the pasta and therefore the risk of breakage is highly reduced.

## Claims

1. A dosing apparatus (1) for dosing long-type pasta, comprising:
a feeding channel (4) for feeding long-type pasta;
a rough dosing channel (2) and a fine dosing channel (3), said dosing channels (2, 3) being in communication with said feeding channel (4) so as to receive long-type pasta, said dosing channels (2, 3) being oriented in such a way as to dose long-type pasta by gravity;
first vibration means (11) that are operatively active on the rough dosing channel (2) for imparting a vibration thereto so as to facilitate the descent of long-type pasta within the rough dosing channel (2), said rough dosing channel (2) comprising a first feeding portion (32) on which the first vibration means (11) are operatively active for imparting the vibration and a rough dosing portion (33) arranged downstream of said first feeding portion (32), said rough dosing portion (33) comprising first guiding means (34) arranged so as to define a first internal space (35) within which the pasta dough is confined and guided in its descent;
second vibration means (12) that are operatively active on the fine dosing channel (3) for imparting a vibration thereto so as to facilitate the descent of long-type pasta within the fine dosing channel (3), said second vibration means (12) being independent from the first vibration means (11);
a first partition element (6) arranged transversely to the rough dosing channel (2), said first partition element (6) being movable therethrough,
**characterised in that**
said guiding means (34) comprise two pairs of guides (36), the guides (36) of the pair being arranged at opposite corresponding sides of the rough dosing portion (33), the two pairs of guides (36) being distanced from one another so as that the first partition element (6) enters the first internal space (35) between the two pairs of guides (36);
and **in that** the dosing device (1) further comprises a first deformation limiting device (28) arranged opposite to said first partition element (6) with respect to the rough dosing channel (2) so as to limit the deformation induced by the insertion of the first partition element (6) into the pasta dough;
wherein the guides (36) and the corresponding deformation limiting device (28) have elongated development according to parallel directions, said deformation limiting device (28) being a shaped profile representing a mechanical stop for the deformation of the pasta dough.

2. The dosing apparatus (1) according to claim 1, wherein the first vibration means (11) are configured to impose a first intensity of vibration on the rough dosing channel (2) and the second vibration means (12) are configured to impose a second intensity of vibration on the fine dosing channel (3).

3. The dosing apparatus (1) according to claim 1 or 2, wherein the first vibration means (11) comprise:
- a first support frame (13) to which the rough dosing channel (2) is rigidly connected, said first support frame (13) being provided with a first ferromagnetic core (15);
- a first ferromagnetic coil (14) facing said first ferromagnetic core (15).

4. The dosing apparatus (1) according to any claims 1 to 3, wherein the second vibration means (12) comprise:
- a second support frame (16) to which the fine dosing channel (3) is rigidly connected, said second support frame (16) being provided with a second ferromagnetic core (18);
- a second ferromagnetic coil (17) facing said second ferromagnetic core (18).

5. The dosing apparatus (1) according to any one of the preceding claims, further comprising a fixed frame (19), said first and second vibration means (11, 12) being elastically connected to said fixed frame (19).

6. The dosing apparatus (1) according to claim 5, comprising a mass (20) connected to said fixed frame (19) by means of one or more elastic springs (21), said first and/or second vibration means (12) being connected to the mass (20).

7. The dosing apparatus (1) according to any one of the preceding claims, comprising a second partition element (7) arranged transversely to the fine dosing channel (3), said second partition element (7) being movable therethrough,
said dosing apparatus (1) further comprising a second deformation limiting device (29) arranged opposite to said second partition element (7) with respect to the fine dosing channel (3) so as to limit the deformation induced by the insertion of the second partition element (7) into the pasta dough.

8. The dosing apparatus (1) according to claim 7, wherein the fine dosing channel (3) comprises a second feeding portion (37) on which the second vibration means (12) are operatively active for imparting the vibration and a fine dosing portion (38) arranged downstream of said second feeding portion (37), said fine dosing portion (38) comprising second guiding means (39) arranged so as to define a second internal space (40) within which the pasta dough is confined and guided in its descent.

9. The dosing apparatus (1) according to claim 8, wherein said second guiding means (39) comprise two pairs of guides (41), the guides (41) of a pair being arranged at opposite corresponding sides of the fine dosing portion (38), the two pairs of guides (41) being distanced from one another so as that the second partition element (7) enters the second internal space (40) between the two pairs of guides (41).

10. A method for dosing long-type pasta using a dosing apparatus (1) according to any one of the preceding claims, the method comprising the steps of:
- imposing a first intensity of vibration on the rough dosing channel (2);
- imposing a second intensity of vibration on the fine dosing channel (3).

## Patentansprüche

1. Dosiervorrichtung (1) zum Dosieren von langen Nudeln, umfassend:
einen Zuführungskanal (4) zum Zuführen langer Nudeln;
einen Grobdosierkanal (2) und einen Feindosierkanal (3), wobei diese Dosierkanäle (2, 3) in Kommunikation mit dem Zuführungskanal (4) stehen, sodass lange Nudeln empfangen werden, wobei die Dosierkanäle (2, 3) so ausgerichtet sind, dass lange Nudeln per Schwerkraft dosiert werden;
erste Vibrationsmittel (11), die betriebswirksam auf dem Grobdosierkanal (2) aktiv sind, um diesem eine Vibration aufzuerlegen, sodass der Abstieg langer Nudeln innerhalb des Grobdosierkanals (2) erleichtert wird, wobei der Grobdosierkanal (2) einen ersten Zuführungsabschnitt (32) umfasst, auf dem die ersten Vibrationsmittel (11) betriebswirksam aktiv sind, um die Vibration aufzuerlegen, und einen Grobdosierabschnitt (33), der dem ersten Zuführungsabschnitt (32) nachgelagert angeordnet ist, wobei der Grobdosierabschnitt (33) erste Führungsmittel (34) umfasst, die so angeordnet sind, dass sie einen ersten Innenraum (35) definieren, innerhalb dessen der Nudelteig abgegrenzt ist und bei seinem Abstieg geführt wird;
zweite Vibrationsmittel (12), die betriebswirksam auf dem Feindosierkanal (3) aktiv sind, um diesem eine Vibration aufzuerlegen, sodass der Abstieg langer Nudeln innerhalb des Feindosierkanals (3) erleichtert wird, wobei die zweiten Vibrationsmittel (12) von den ersten Vibrationsmitteln (11) unabhängig sind;
ein erstes Trennelement (6), das quer zum Grobdosierkanal (2) angeordnet ist, wobei das erste Trennelement (6) durch diesen bewegbar ist,
**dadurch gekennzeichnet, dass** die Führungsmittel (34) zwei Paare von Führungen (36) umfassen, die Führungen (36) des Paars an entgegengesetzten entsprechenden Seiten des Grobdosierabschnitts (33) angeordnet sind, die zwei Paare von Führungen (36) voneinander so beabstandet sind, dass das erste Trennelement (6) in den ersten Innenraum (35) zwischen den beiden Paaren von Führungen (36) eintritt,
und dadurch, dass die Dosiervorrichtung (1) zudem eine erste Verformungsbegrenzungsvorrichtung (28) umfasst, die entgegengesetzt zum ersten Trennelement (6) in Bezug auf den Grobdosierkanal (2) angeordnet ist, sodass die durch das Einfügen des ersten Trennelements (6) in den Nudelteig herbeigeführte Verformung begrenzt wird,
wobei die Führungen (36) und die entsprechende Verformungsbegrenzungsvorrichtung (28) eine langgestreckte Entwicklung gemäß parallelen Richtungen aufweisen, wobei die Verformungsbegrenzungsvorrichtung (28) ein geformtes Profil ist, das eine mechanische Arretierung für die Verformung des Nudelteigs repräsentiert.

2. Dosiervorrichtung (1) nach Anspruch 1, wobei die ersten Vibrationsmittel (11) ausgelegt sind, um dem Grobdosierkanal (2) eine erste Vibrationsintensität aufzuerlegen, und die zweiten Vibrationsmittel (12) ausgelegt sind, um dem Feindosierkanal (3) eine zweite Vibrationsintensität aufzuerlegen.

3. Dosiervorrichtung (1) nach Anspruch 1 oder 2, wobei die ersten Vibrationsmittel (11) Folgendes umfassen:
- einen ersten Stützrahmen (13), mit dem der Grobdosierkanal (2) steif verbunden ist, wobei der erste Stützrahmen (13) mit einem ersten ferromagnetischen Kern (15) versehen ist;
- eine erste ferromagnetische Spule (14), die dem ersten ferromagnetischen Kern (15) zugewandt ist.

4. Dosiervorrichtung (1) nach Anspruch 1 bis 3, wobei die zweiten Vibrationsmittel (12) Folgendes umfassen:
- einen zweiten Stützrahmen (16), mit dem der Feindosierkanal (3) steif verbunden ist, wobei der zweite Stützrahmen (16) mit einem zweiten ferromagnetischen Kern (18) versehen ist;
- eine zweite ferromagnetische Spule (17), die dem zweiten ferromagnetischen Kern (18) zugewandt ist.

5. Dosiervorrichtung (1) nach einem der vorhergehenden Ansprüche, zudem umfassend einen festen Rahmen (19), wobei die ersten und die zweiten Vibrationsmittel (11, 12) elastisch mit dem festen Rahmen (19) verbunden sind.

6. Dosiervorrichtung (1) nach Anspruch 5, umfassend eine Masse (20), die mit dem festen Rahmen (19) mittels einer oder mehrerer Federn (21) verbunden ist, wobei die ersten und/oder zweiten Vibrationsmittel (12) mit der Masse (20) verbunden sind.

7. Dosiervorrichtung (1) nach einem der vorhergehenden Ansprüche, umfassend ein zweites Trennelement (7), das quer zum Feindosierkanal (3) angeordnet ist, wobei das zweite Trennelement (7) durch diesen bewegbar ist, wobei die Dosiervorrichtung (1) zudem eine zweite Verformungsbegrenzungsvorrichtung (29) umfasst, die gegenständig zum zweiten Trennelement (7) in Bezug auf den Feindosierkanal (3) angeordnet ist, sodass die durch das Einfügen des zweiten Trennelements (7) in den Nudelteig herbeigeführte Verformung begrenzt wird.

8. Dosiervorrichtung (1) nach Anspruch 7, wobei der Feindosierkanal (3) einen zweiten Zuführungsabschnitt (37) umfasst, auf dem die zweiten Vibrationsmittel (12) betriebswirksam aktiv sind, um die Vibration aufzuerlegen, und einen Feindosierabschnitt (38), der dem zweiten Zuführungsabschnitt (37) nachgelagert angeordnet ist, wobei der Feindosierabschnitt (38) zweite Führungsmittel (39) umfasst, die so angeordnet sind, dass sie einen zweiten Innenraum (40) definieren, innerhalb dessen der Nudelteig begrenzt ist und bei seinem Abstieg geführt wird.

9. Dosiervorrichtung (1) nach Anspruch 8, wobei die zweiten Führungsmittel (39) zwei Paare von Führungen (41) umfassen, die Führungen (41) eines Paars an entgegengesetzten entsprechenden Seiten des Feindosierabschnitts (38) angeordnet sind, die beiden Paare von Führungen (41) voneinander beabstandet sind, sodass das zweite Trennelement (7) in den zweiten Innenraum (40) zwischen den beiden Paaren von Führungen (41) eintritt.

10. Verfahren zum Dosieren von langen Nudeln unter Verwendung einer Dosiervorrichtung (1) nach einem der vorhergehenden Ansprüche, wobei das Verfahren die folgenden Schritte umfasst:
- Auferlegen einer ersten Vibrationsintensität auf dem Grobdosierkanal (2);
- Auferlegen einer zweiten Vibrationsintensität auf dem Feindosierkanal (3).

## Revendications

1. Appareil de dosage (1) de pâtes de type long, comprenant :
un canal d'alimentation (4) pour alimenter des pâtes de type long ;
un canal de dosage grossier (2) et un canal de dosage fin (3), lesdits canaux de dosage (2, 3) étant en communication avec ledit canal d'alimentation (4) de manière à recevoir des pâtes de type long, lesdits canaux de dosage (2, 3) étant orientés de manière à doser les pâtes de type long par gravité ;
des premiers moyens de vibration (11) qui sont fonctionnellement actifs sur le canal de dosage grossier (2) pour lui transmettre une vibration de manière à faciliter la descente de pâtes de type long à l'intérieur du canal de dosage grossier (2), ledit canal de dosage grossier (2) comprenant une première portion d'alimentation (32) sur laquelle les premiers moyens de vibration (11) sont fonctionnellement actifs pour transmettre la vibration et une portion de dosage grossier (33) agencée en aval de ladite première portion d'alimentation (32), ladite portion de dosage grossier (33) comprenant des premiers moyens de guidage (34) agencés de manière à définir un premier espace interne (35) à l'intérieur duquel la pâte à pâtes est confinée et guidée dans sa descente ;
des seconds moyens de vibration (12) qui sont fonctionnellement actifs sur le canal de dosage fin (3) pour lui transmettre une vibration de manière à faciliter la descente de pâtes de type long à l'intérieur du canal de dosage fin (3), lesdits seconds moyens de vibration (12) étant indépendants des premiers moyens de vibration (11) ;
un premier élément de séparation (6) agencé transversalement au canal de dosage grossier (2), ledit premier élément de séparation (6) étant mobile à travers celui-ci,
**caractérisé en ce que** lesdits moyens de guidage (34) comprennent deux paires de guides (36), les guides (36) de la paire étant agencés au niveau de côtés correspondants opposés de la portion de dosage grossier (33), les deux paires de guides (36) étant espacées l'une de l'autre de sorte que le premier élément de séparation (6) pénètre dans le premier espace interne (35) entre les deux paires de guides (36) ;
et **en ce que** le dispositif de dosage (1) comprend en outre un premier dispositif de limitation de déformation (28) agencé à l'opposé dudit premier élément de séparation (6) par rapport au canal de dosage grossier (2) de manière à limiter la déformation induite par l'insertion du premier élément de séparation (6) dans la pâte à pâtes ;
dans lequel les guides (36) et le dispositif de limitation de déformation (28) correspondant ont un développement allongé selon des directions parallèles, ledit dispositif de limitation de déformation (28) étant un profilé façonné représentant un arrêt mécanique pour la déformation de la pâte à pâtes.

2. Appareil de dosage (1) selon la revendication 1, dans lequel les premiers moyens de vibration (11) sont configurés pour imposer une première intensité de vibration sur le canal de dosage grossier (2) et les seconds moyens de vibration (12) sont configurés pour imposer une seconde intensité de vibration sur le canal de dosage fin (3).

3. Appareil de dosage (1) selon la revendication 1 ou 2, dans lequel les premiers moyens de vibration (11) comprennent :
- un premier cadre de support (13) auquel le canal de dosage grossier (2) est rigidement relié, ledit premier cadre de support (13) étant pourvu d'un premier noyau ferromagnétique (15) ;
- une première bobine ferromagnétique (14) faisant face audit premier noyau ferromagnétique (15).

4. Appareil de dosage (1) selon l'une quelconque des revendications 1 à 3, dans lequel les seconds moyens de vibration (12) comprennent :
- un second cadre de support (16) auquel le canal de dosage fin (3) est rigidement relié, ledit second cadre de support (16) étant pourvu d'un second noyau ferromagnétique (18) ;
- une deuxième bobine ferromagnétique (17) faisant face audit deuxième noyau ferromagnétique (18).

5. Appareil de dosage (1) selon l'une quelconque des revendications précédentes, comprenant en outre un cadre fixe (19), lesdits premiers et seconds moyens de vibration (11, 12) étant reliés élastiquement audit cadre fixe (19).

6. Appareil de dosage (1) selon la revendication 5, comprenant une masse (20) reliée audit cadre fixe (19) au moyen d'un ou plusieurs ressorts élastiques (21), lesdits premiers et/ou seconds moyens de vibration (12) étant reliés à la masse (20).

7. Appareil de dosage (1) selon l'une quelconque des revendications précédentes, comprenant un second élément de séparation (7) agencé transversalement au canal de dosage fin (3), ledit second élément de séparation (7) étant mobile à travers celui-ci,
ledit appareil de dosage (1) comprenant en outre un second dispositif de limitation de déformation (29) agencé à l'opposé dudit second élément de séparation (7) par rapport au canal de dosage fin (3) de manière à limiter la déformation induite par l'insertion du second élément de séparation (7) dans la pâte à pâtes.

8. Appareil de dosage (1) selon la revendication 7, dans lequel le canal de dosage fin (3) comprend une seconde portion d'alimentation (37) sur laquelle les seconds moyens de vibration (12) sont fonctionnellement actifs pour transmettre la vibration et une portion de dosage fin (38) agencée en aval de ladite seconde portion d'alimentation (37), ladite portion de dosage fin (38) comprenant des seconds moyens de guidage (39) agencés de manière à définir un second espace interne (40) à l'intérieur duquel la pâte à pâtes est confinée et guidée dans sa descente.

9. Appareil de dosage (1) selon la revendication 8, dans lequel lesdits seconds moyens de guidage (39) comprennent deux paires de guides (41), les guides (41) d'une paire étant agencés au niveau de côtés correspondants opposés de la portion de dosage fin (38), les deux paires de guides (41) étant espacées l'une de l'autre de sorte que le second élément de séparation (7) pénètre dans le second espace interne (40) entre les deux paires de guides (41).

10. Procédé de dosage de pâtes de type long à l'aide d'un appareil de dosage (1) selon l'une quelconque des revendications précédentes, le procédé comprenant les étapes de :
- imposer une première intensité de vibration sur le canal de dosage grossier (2) ;
- imposer une seconde intensité de vibration sur le canal de dosage fin (3).
